# EUROPÄISCHE PATENTSCHRIFT

(11) **EP 0 315 746 B1**
(45) Veröffentlichungstag und Bekanntmachung des Hinweises auf die Patenterteilung: **14.04.1993**
(21) Anmeldenummer: 88114491.9
(22) Anmeldetag: 06.09.1988
(51) Int. Cl.: G21F 9/36, B30B 9/32

(54) **Verfahren und Vorrichtung zur Kompaktierung eines Brennelementskelettes**
Method and device for compacting the skeleton of a nuclear fuel element
Procédé et dispositif pour rendre compact un élément combustible nucléaire

(30) Priorität: 02.10.1987 DE 3733387; 02.02.1988 DE 3802966
(43) Veröffentlichungstag der Anmeldung: 17.05.1989
(73) Patentinhaber: Brennelementlager Gorleben GmbH, D-29475 Gorleben (DE)
(72) Erfinder: Lahr, Helfrid, Dr., D-3002 Wedemark (DE); Pontani, Bernd, D-8755 Alzenau (DE)
(74) Vertreter: Andrejewski, Walter

(56) Entgegenhaltungen:
- EP-A- 0 066 695
- EP-A- 0 228 008
- AT-B- 205 350
- DE-A- 2 027 401
- DE-A- 3 213 544
- DE-C- 416 712
- DE-C- 526 150
- DE-C- 3 213 497
- DE-C- 3 430 243

## Beschreibung

Die Erfindung betrifft ein verfahren gemäß Patentanspruch 1.

Es ist bekannt, aus bestrahlten Brennelementen, die nach einer gewissen Abbrandzeit aus einem Kernreaktor entladen und entsorgt werden, die einzelnen Brennstäbe herauszuziehen (EP-A 00 66 695). Übrig bleibt neben den Brennstäben, die entweder für die folgende Wiederaufarbeitung geschnitten oder in spezielle Lagerbehälter gefüllt werden, das Brennelementskelett, das heißt, die Strukturteile des Brennelements (Zeitschrift "atomwirtschaft", Februar 1970, S. 90). Dieses Brennelementskelett muß einer Lagerung zugeführt und dafür in ein lagerfähiges Behältnis gebracht werden.

Aus der DE-C 34 30 243 ist es bekannt, einen Lagerbehälter zur Aufnahme von einzelnen Brennstaben mit einem speziellen Einsatzkorb auszurüsten, der in der Mitte einen leeren quadratischen Schacht zur Aufnahme des bei der Vereinzelung der Brennstäbe anfallenden Schrotts, das heißt der Strukturteile des Brennelementes, dient. In den quadratischen Mittelschacht werden die Brennelementstrukturteile eingefüllt.

Zur wirtschaftlichen Verwendung von radioaktive Stoffe und radioaktiv kontaminierte Gegenstände aufnehmende Behältnisse oder Räume ist es sinnvoll, die Brennelementstrukturteile, das Brennelementskelett, zu kompaktieren, um eine Volumenreduzierung herbeizuführen.

Aus der DE-C 32 13 497 ist ein Verfahren zum Kompaktieren von zerkleinerten radioaktiven Abfallstoffen bekannt, wobei das Kompaktieren in einem Behälter aus Stahlblech erfolgt. Der Behälter wird in einer Presse mit den zerkleinerten radioaktiven Abfallstoffen gefüllt und danach mit einem Deckel aus Stahlblech versehen und zu einem Stahlmantelkörper verdichtet. Dieses für zerkleinerte radioaktive Abfallstoffe anwendbare Verfahren ist für ein nahezu 5 Meter langes Brennelementskelett nicht durchführbar.

Der Erfindung liegt die Aufgabe zugrunde, ein Verfahren der eingangs geschilderten Art zu schaffen, mit der ein einfaches Verdichten eines Brennelementskelettes möglich ist und bei dem der Preßling einfach gehandhabt werden kann.
Die Aufgabe wird erfindungsgemäß durch die Merkmale des Kennzeichens im Anspruch 1 gelöst.

Das Brennelement wird gegen den Boden des Preßschachtes in Längsrichtung zusammengepreßt. Nach dem Verpressen wird das Preßpaket in einen Übergabeschacht, ein Rohrstück, geschoben und mit diesem aus der Presse abtransportiert. Das Rohr umschließt den Preßling, so daß gebrochene Skelettstücke gesichert bleiben und eine Volumenexpansion durch eine Entspannung des Preßlings verhindert wird. Die erreichte Maßhaltigkeit des Preßlings ist vorteilhaft für die weiteren Verfahrensschritte.

Durch die Weiterbildung des Verfahrens nach dem Anspruch 2 kann das Brennelementskelett über ein in den Verfahrenszellen üblicherweise vorhandenes Hebezeug über den geöffneten Pressenschacht der Kolbenpresse gebracht und in diesen Pressenschacht abgesenkt werden. Der Pressenschacht wird dann über seine Länge verschlossen.

In weiterer Ausgestaltung des Verfahrens wird gemäß dem Anspruch 3 vorgesehen, daß der Pressenschacht aus der Kolbenpresse entnommen wird, so daß das Brennelementskelett stirnseitig in den umfangsmäßig geschlossenen Pressenschacht eingeschoben werden kann. Anschließend wird der Pressenschacht in die Kolbenpresse zurückgesetzt und der Kompaktierungsvorgang durchgeführt. Es wird so das nachträgliche Verschließen des Pressenschachtes bezüglich seiner oberen Längsseite vermieden.

Durch vorteilhafte Ausgestaltung nach dem Anspruch 4 kann der Preßling aus dem Übergabeschacht in einfacher Weise in sein Lagerbehältnis geschoben werden. Dabei wird eine Lagerbüchse oder ein anderes Lagerbehältnis von außen an eine Beladewand gebracht, während der Übergabeschacht von innen fluchtend angedockt wird. Der Preßling wird somit sicher und maßhaltig aus dem Übergabeschacht in das Lagerbehältnis eingeführt, das nicht in die Heiße Zelle, in der der Preßvorgang stattfindet, eingebracht werden muß. Das Lagerbehältnis befindet sich in Kontaminationsfreier Atmosphäre und kann dadurch ohne aufwendige Schutzmaßnahmen weiter behandelt werden.

Die Erfindung betrifft auch eine Vorrichtung zur Durchführung des Verfahrens nach einem der Ansprüche 1 bis 3, die durch die Merkmale des Anspruchs 5 gekennzeichnet ist. Der Pressenschacht entspricht der Länge eines Brennelementsielettes,was bei den DWR-Brennelementen ungefähr 5 Meter Länge erfordert. Über den längsverschiebbaren Preßstempel wird das Breimelementskelett nach dem Beladen des Pressenschachtes gegen das Preßbodenteil gedrückt. Dabei wird das Brennelementskelett zur Volumenverringerung kompaktiert. Das Preßbodenteil wird nach dem Kompaktiervorgang entfernt, und dafür ein rohrförmiger Übergabeschacht in den Raum des Preßbodenteils fluchtend zum Pressenschacht eingesetzt. Ein weiteres Vorschieben des Preßstempels führt zum Einschieben des Preßlings in den Übergabeschacht. Der Pressenschacht ist dadurch frei und der Preßling kann mit dem Übergabeschacht aus dem Endbereich der Kolbenpresse entfernt werden.

In vorteilhafter Ausgestaltung der Vorrichtung ist der Pressenschacht gemäß Anspruch 6 innerhalb der Kolbenpresse fest angeordnet und auf seiner oberen Längsseite öffenbar bzw. schließbar.

In weiterer Ausgestaltung der erfindungsgemäßen Vorrichtung ist gemäß dem Anspruch 7 die Kolbenpresse mit einem herausnehmbaren Pressenschacht versehen, in den stirnseitig das Brennelementskelett einschiebbar ist. Der beladene Pressenschacht ist in die Kolbenpresse wieder einsetzbar und wird stirnseitig auf der einen Seite von der Kolbenpreßeinheit und auf der anderen Seite von dem Preßbodenteil begrenzt.

Anhand der Zeichnung wird nachstehend ein Ausführungsbeispiel der Erfindung im schematischen Ablauf näher erläutert. Es zeigt
- Fig. 1: das Beschicken einer mit einem über die obere Längsseite geöffneten Pressenschacht versehene Kolbenpresse mit einem Brennelementskelett,
- Fig. 2: die beladene Kolbenpresse mit geschlossenem Pressenschacht,
- Fig. 3: die geschlossene Kolbenpresse mit kompaktiertem Brennelementskelett,
- Fig. 4: den in einen rohrförmigen Übergabeschacht eingeschobenen Preßling,
- Fig. 5: den Transport des Übergabeschachtes mit einem Laufkran,
- Fig. 6: das Einschieben des Preßlings in eine Lagerbüchse durch eine Beladeöffnung in der Zellenwand,
- Fig. 7: eine modifizierte Ausführung der Kolbenpresse mit einem längsseitig geschlossenen, herausnehmbaren Pressenschacht.

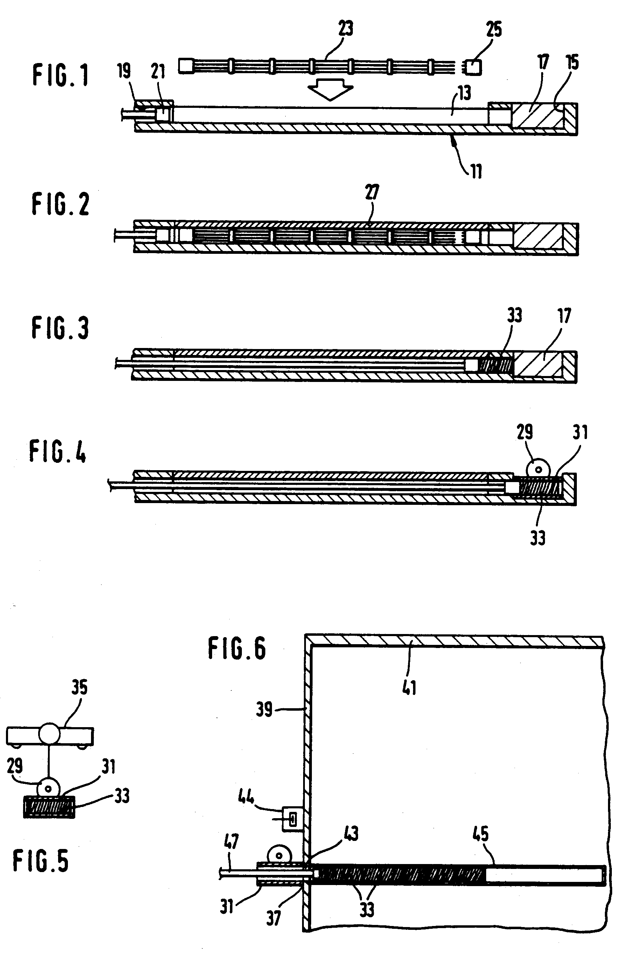

Die Kolbenpresse 11 weist im Pressenbett einen Pressenschacht 13 von ungefähr 5 Metern Länge auf. Am Ende des Pressenschachtes 13 ist in eine Ausnehmung 15 ein nach oben herausnehmbares Preßbodenteil 17 eingelassen, das das Stirnende des Pressenschachtes 13 abdeckt. Am anderen Ende des Pressenschachtes 13 ist in einer Führung 19 ein längsverschiebbarer Preßstempel 21 vorhanden, der kraftbeaufschlagbar ist. Über dem geöffneten Pressenschacht 13 ist ein Brennelementskelett 23 horizontal vorhanden (Fig. 1), dessen eines Kopfstück 25 abgetrennt ist. Das Brennelementskelett 23 wird mit dem Kopfstück 25 in den Pressenschacht 13 eingebracht.

Der Pressenschacht 13 wird mit einer Deckplatte 27 geschlossen (Fig. 2) und der Preßstempel 21 beaufschlagt. Durch die Längsbewegung des Preßstempels 21 wird das Brennelementskelett 23 kompaktiert (Fig. 3), ohne daß es ausbeulen kann.

Nach dem Kompaktieren wird das Preßbodenteil 17 aus der Ausnehmung 15 nach oben herausgenommen und entfernt. In die freigewordene Ausnehmung 15 wird ein mit einer Kranöse 29 versehener Übergabeschacht 31 aus einem metallischen Rohrstück in diese Ausnehmung 15 gesetzt. Durch weiteres Vorschieben des Preßstempels 21 im Pressenschacht 13 wird der Preßling 33 in den Übergabeschacht 31 eingeschoben (Fig. 4).

Der Übergabeschacht 31 mit dem eingeschobenen Preßling 33 wird über einen Laufkran 35 an der Kranöse 29 erfaßt (Fig. 5) und zu einer Andockstelle 37 an einer Zellenwand 39 eines gegenüber der Zelle abgeschlossenen Caissons 41 gebracht (Fig. 6). Dort wird eine Beladeöffnuag 43 durch Verschieben eines Verschlusses 44 dann freigemacht, wenn auf der gegenüberliegenden Wandseite eine längliche Lagerbüchse 45 angedockt ist. Der Übergabeschacht 31 wird fluchtend zu der Lagerbüchse 45 angedockt. Über einen fluchtenden Stempel 47 wird der Preßling 33 aus dem Übergabeschacht 31 durch die Beladeöffnung 43 in der Wand 39 in die Lagerbüchse 45 eingeschoben. Wie aus der Fig. 6 ersichtlich ist, kann die Lagerbüchse 45 mehrere Preßlinge 33 nacheinander aufnehmen.

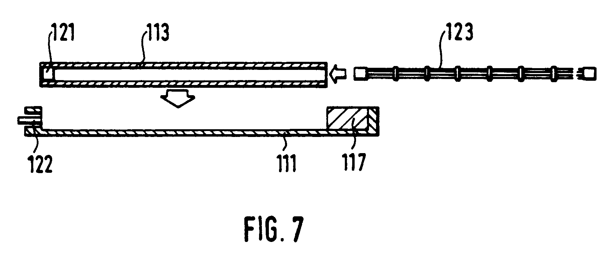

In der Fig. 7 wird eine modifizierte Kolbenpresse 111 gezeigt. Diese Kolbenpresse 111 weist einen auf seinen Längsseiten allseitig geschlossenen Pressenschacht 113 auf, dessen Stirnseiten weiterhin geöffnet sind. Der Pressenschacht 113 ist daher außerhalb der Kolbenpresse 111 mit einem Brennelementskelett 123 beladbar und kann im beladenen Zustand wieder zwischen der Preßeinheit und dem Preßbodenteil 117 eingesetzt werden.

Die Preßeinheit weist einen lose geführten Preßstempel 121 auf, der im Ende des Pressenschachtes 113 angeordnet ist. Im eingebauten Zustand des Pressenschachtes 113 kann der Preßstempel 121 über eine Kolbenstange 122 von einer Kolben-Zylinder-Einheit kraftbeaufschlagt werden.

### Bezugszeichenliste

- 11: Kolbenpresse
- 13: Pressenschacht
- 15: Ausnehmung
- 17: Preßbodenteil
- 19: Führung
- 21: Preßstempel
- 23: Brennelementskelett
- 25: Kopfstück
- 27: Deckplatte
- 29: Kranöse
- 31: Übergabeschacht
- 33: Preßling
- 35: Laufkran
- 37: Andockstelle
- 39: Zellenwand
- 41: Caisson
- 43: Beladeöffnung
- 44: Verschluß
- 45: Lagerbüchse
- 47: Stempel
- 111: Kolbenpresse
- 113: Pressenschacht
- 117: Preßbodenteil
- 121: Preßstempel
- 122: Kolbenstange

## Patentansprüche

1. Verfahren zur Behandlung eines von Brennstäben befreiten Brennelementskelettes (23) eines bestrahlten Kernreaktorbrennelementes, wobei das Brennelementskelett (23) in einen Pressenschacht (13) einer Kolbenpresse (11) eingebracht wird, wobei das sich im Pressenschacht (13) befindliche und vom Pressenschacht (13) umschlossene Brennelementskelett (23) in Längsrichtung gegen ein Preßbodenteil (17) kompaktiert wird, wobei das kompaktierte Brennelementskelett (23) aus dem Pressenschacht (13) in einen transportablen, den Preßling umschließenden Übergabeschacht (31) ausgeschloben wird, und wobei der beladene Übergabeschacht (31) aus der Kolbenpresse entnommen und abtransportiert wird.

2. Verfahren nach Anspruch 1,
dadurch gekennzeichnet,
daß das Brennelementskelett (23) in waagerechter Lage in einen in der Kolbenpresse (11) befindlichen, oben offenen Pressenschacht (13) eingebracht wird, daß der Pressenschacht (13) oben abgedeckt wird, bevor das Brennelementskelett (13) in Längsrichtung kompaktiert wird.

3. Verfahren nach Anspruch 1,
dadurch gekennzeichnet,
daß das Brennelementskelett (123) horizontal in einen separat von der Kolbenpresse (111) vorgehaltenen Pressenschacht (113) stirnseitig eingeschoben wird, daß der beladene Pressenschacht in das Pressengehäuse passend eingelegt wird bevor der Kompaktierungsvorgang vorgenommen wird.

4. Verfahren nach einem der Ansprüche 1 bis 3,
dadurch gekennzeichnet,
daß der Übergabeschacht (31) an einer Wandöffnung (43) fluchtend zu einem mehrere kompaktierte Brennelementskelette (33) aufnehmenden Lagerbehältnis (45) angebracht und der Pressling (33) aus dem Übergabeschacht (31) in das Lagerbehältnis (45) eingeschoben wird.

5. Vorrichtung zur Durchführung des Verfahrens nach einem der Ansprüche 1 bis 3, wobei eine horizontale Kolbenpresse (11) vorgesehen ist, deren Pressenschacht (13) der Länge eines Brennelementskelettes (23, 25) entspricht und dieses umschließen sowie aufnehmen kann, wobei an dem einen Ende der Kolbenpresse (11) ein herausnehmbares Preßbodenteil (17) eingesetzt ist, wobei am anderen Ende der Kolbenpresse (11) ein kraftbeaufschlagbarer, längsverschiebarer Preßstempel (21) vorhanden ist, und wobei in dem Raum des Preßbodenteils (17) ein Übergabeschacht (31) fluchtend zum Pressenschacht (13) einsetzbar ist.

## Claims

1. A method for treating a fuel element skeleton (23) of a radiated nuclear reactor fuel element with fuel rods removed, whereby the fuel element skeleton (23) is placed into a press shaft (13) of a piston press (11), whereby the fuel element skeleton (23) being in the press shaft (13) and enclosed by the press shaft (13) is compacted in longitudinal direction against a press bottom section (17), whereby the compacted fuel element skeleton (23) is pushed out of the press shaft (13) into a transportable transfer shaft (31) enclosing the pressed piece, and whereby the charged transfer shaft (31) is removed from the piston press and carted off.

2. A method according to claim 1, **characterized in that** the fuel element skeleton (23) is placed in horizontal position into a press shaft (13) open on top inside the piston press (11), and in that the press shaft (13) will be covered before compacting the fuel element skeleton (23) in longitudinal direction.

3. A method according to claim 1, **characterized in that** the fuel element skeleton (123) is pushed into the front side of a press shaft (113) being separately held from the piston press (111), and in that the charged press shaft is fittingly inserted into the press frame before starting the compacting operation.

4. A method according to any of the claims 1 to 3, **characterized in that** the transfer shaft (31) at a wall opening (43) is attached in true alignment to a storage container (45) capable of holding several compacted fuel element skeletons (33), and the pressed piece (33) is pushed from the transfer shaft (31) into the storage container (45).

5. A facility for effecting the method according to any of the claims 1 to 3, wherein a horizontal piston press (11) is provided, the press shaft (13) of which corresponds with the length of a fuel element skeleton (23, 25) and can as well enclose as receive the latter, whereby a removable press bottom section (17) is attached to one end of the piston press (11), and a longitudinally movable press ram (21) capable of being admitted with force is provided at the other end of the piston press (11), and whereby a transfer shaft (31) in true alignment with the press shaft (13) may be provided in the space of the press bottom section (17).

## Revendications

1. Procédure visant au traitement d'un squelette d'élément combustible (23) exempt de crayons combustibles d'un élément combustible de réacteur nucléaire irradié, le squelette d'élément combustible (23) étant placé dans une cuve de presse (13) d'une presse à piston (11), le squelette d'élément combustible (23) se trouvant dans la cuve de la presse (13) et entouré par la cuve de la presse (13) étant compacté dans le sens longitudinal contre un fond à compression (17), le squelette d'élément combustible compacté (23) étant alors expulsé de la cuve de la presse (13) dans une cuve de transfert transportable entourant la pièce pressée (31), et la cuve de transfert chargée (31) étant finalement prélevée de la presse à piston et transportée.

2. Procédure selon la revendication 1, **caractérisée par le fait,** que le squelette d'élément combustible (23) est placé en position horizontale dans une cuve de presse (13) ouverte vers le haut et se trouvant dans la presse à piston (11), que la cuve de la presse (13) est recouverte en haut avant que le squelette d'élément combustible (13) soit compacté dans le sens longitudinal.

3. Procédure selon la revendication 1, **caractérisée par le fait,** que le squelette d'élément combustible (23) est inséré à l'horizontale, du côté frontal, dans une cuve de presse (13) placée séparément de la presse à piston (11), que la cuve de la presse chargée est insérée avec précision dans le carter de la presse avant le début du processus de compactage.

4. Procédure selon l'une des revendications 1 à 3, **caractérisée par le fait,** que la cuve de transfert (31) est placée sur un orifice mural (43) de manière affleurée à un réservoir (45) logeant plusieurs squelettes d'éléments combustibles compactés (33) et que la pièce pressée (33) est insérée depuis la cuve de transfert (31) dans le réservoir (45).

5. Dispositif destiné à l'exécution de la procédure selon l'une des revendications 1 à 3, une presse à piston horizontale (11) étant prévue, presse dont la cuve (13) correspond à la longueur d'un squelette d'élément combustible (23, 25) et peut l'entourer ainsi que le loger, un fond à compression amovible (17) étant placé à l'une des extrémités de la presse à piston (11), un plateau de compression (21) pouvant être déplacé longitudinalement et être soumis à une force étant placé à l'autre extrémité de la presse à piston (11), et une cuve de transfert (31) affleurée à la cuve de la presse (13) pouvant être insérée dans la zone du fond à compression (17).
